# EUROPEAN PATENT APPLICATION

(11) **EP 4 643 810 A1**
(43) Date of publication of application: **05.11.2025**
(21) Application number: 24382491.9
(22) Date of filing: 03.05.2024
(51) Int. Cl.: A61C 7/08, B33Y 80/00

(54) **ORTHODONTIC APPLIANCES AND METHODS OF MANUFACTURING**

(71) Applicant: Orthodontic Research and Development, S.L., 08022 Barcelona (ES)
(72) Inventor: CARRIERE LLUCH, Luis, 08017 BARCELONA (ES)
(74) Representative: Bardehle Pagenberg S.L.

(57) **Abstract**

Orthodontic appliances are disclosed, comprising an integrally formed shell including a first shell part comprising one or more first cavities adapted to receive the first teeth of the patient, a second shell part comprising one or more second cavities adapted to receive the second teeth of the patient, and a modified active shell part connecting the first shell part and the second shell part, and wherein the modified active shell part comprises one or more active elements configured to apply forces to the first and/or the second shell part. The disclosure further relates to methods for manufacturing an orthodontic appliance, to computer-implemented methods for generating an input file for a 3D printer and to kits comprising series of consecutive shells.

## Description

The present disclosure relates to orthodontic appliances, and more particularly relates to orthodontic appliances comprising one or more shells. The present disclosure further relates to methods of manufacturing such appliances.

### BACKGROUND ART

Depending on a patient's malocclusion, a variety of orthodontic treatments is available. In some of these treatments, extraction of teeth may be required in order to create space for the remaining teeth. Other well-known methods of treatment involve the use of orthodontic brackets and/or of (transparent) shells to be fitted around a segment of teeth or a complete arc of teeth, i.e. so-called "aligners". A segment of teeth is herein defined as a group of neighbouring teeth, i.e. two or more neighbouring teeth.

So-called aligners commercialized under the name Invisalign^{®} and under other names have become popular due to their pleasant design as compared to traditional brackets. The treatment with aligners includes designing a treatment path for a complete arch of teeth, wherein the teeth undergo a movement from the original position to a final desired position. The process may start with the use of an intra-oral scanner to obtain precise data and a virtual model of a patient's teeth. A professional may then provide input as to the final position to be obtained for the specific patient.

Instead of an intra-oral scanner, a desktop scanner, CT-based scanner or plaster models may also be used to obtain a model of the initial position of a patient's teeth. Such a plaster model may be digitalized for this purpose.

Then, a number of consecutive intermediate positions in between the original and the final position for the teeth are determined, including movements of teeth that may include rotation about a root, torsion, in-out displacement, and mesial-distal displacement. The virtual models of each of the positions can include detail of the specific teeth of the patient.

The selection of the desired final position as well as the intermediate positions may be determined through an online portal. A professional such as an orthodontist may access the portal and provide input. The portal may provide suggestions to the orthodontist to aid in this process.

A series of shells (dental splints or "aligners") is then provided to the patient. These shells correspond to the arch of teeth in their intermediate positions and final position. The shells apply corrective forces to the arch of teeth (when fitted onto the teeth), because the shell is shaped substantially according to the next intermediate position. Each of the shells is used during a period of time, e.g. one or a few weeks. Once the teeth have assumed the desired position, a shell corresponding to the next intermediate position is to be fitted. This process goes on until ultimately, the teeth reach their final desired position.

The capacity for movements in between consecutive intermediate positions is limited by the elastic deformation of the shells. The capacity for movement of the shells determines the number of intermediate positions (and thus the number of shells) that are necessary to reach the final desired position.

The shells or aligners are generally manufactured by a manufacturer and then a set is supplied to an orthodontist who delivers it to his/her patients. The most used process prints 3D models of the above-mentioned intermediate positions and end position. Additive manufacturing may be used to obtain the 3D models.

Then, a process of thermoforming is used, which involves transparent plastic sheets or foil being heated and molded over each of the printed 3D models by a pressure- or vacuum-forming machine. In particular, vacuum thermoforming may be used. The obtained shells or aligners can then be trimmed and finished for delivery to the patient or orthodontist.

On the other hand, it is known to use a process of "direct printing". A direct printing process may comprise data acquisition using scanning of the teeth of the patient as before. Similarly, as mentioned before, treatment planning may involve virtual models of the starting position of the teeth, the desired end positions of the teeth as well as a number of intermediate positions.

In the direct printing process, rather than manufacturing real 3D models of the different positions, the shells or aligners are directly printed using an appropriate resin-printer combination and e.g. one or more .stl files according to the anatomy of a patient. After this, suitable post-processing may be carried out.

The resin material should possess adequate physical, and mechanical properties for aligner/shell material fabrication. A known suitable resin is e.g. Tera Harz TC-85 DAC commercially available from Graphy Inc. This resin is an aliphatic vinyl ester-urethane polymer, with methacrylate functionalization that exhibits shape memory. Other resins for direct printing of shells or aligners are known as well. E.g. "3Dresyn OD-Clear TF LTP" commercially available from 3DResyns Company is another example.

Suitable printing processes include vat polymerization, which is a method in 3D printing that utilizes a vat of liquid polymer resin by exposing it to ultraviolet light for solidification. Different printing technologies based on this method are stereolithography (SLA), digital light processing (DLP), and liquid crystal display (LCD).

Direct printing has the (at least theoretical) advantage of reducing errors occurring in the intermediate steps. Also, providing shells with uniform thickness is difficult to achieve with the thermoforming process.

US 2016/0128803 A1 discloses an aligner that comprises two shell segments joined by a active element for covering corresponding teeth segments. This segmental aligner aims to isolate the forces between different teeth sets. This prior art disclosure is based on the use of vacuum forming. Parts of the formed shell are cut off, and active elements are provided to connect the part shells.

In one example of this prior art document, a continuous shell body may be formed, and corrugated active elements are used. The objective of the corrugated active elements is to limit the transmission of forces. The corrugated active elements are arranged on the labial and lingual sides of the shell body, as well as on the occlusal side. The corrugation locally increases dimensions of the shell beyond the dimension of the teeth covered by the corrugation. At the occlusal side, this can lead to problems of premature contact between maxillary and mandibular teeth of the patient.

Even though the use of consecutive transparent shells has become very popular, one downside related to the treatment is that the orthodontist has relatively little ability to steer the treatment after the design of the initial strategy. The consecutive shells have been manufactured and are worn by the patient. The patient will typically visit the orthodontist for check-ups every 4 - 6 weeks. However, the orthodontist does not have a lot of options to adjust the strategy even if a specific movement of a tooth or set of teeth is not responding to the treatment. The consecutive shells have been designed and manufactured.

Moreover, the movement that can be achieved with each intermediate position is limited by the elasticity of the shell material. Depending on the malocclusion, many intermediate positions may be necessary, and the duration of the treatment can be long.

Currently, the available solution is that when a deviation from a theoretical treatment path is observed, a new scan of the patient's teeth is performed. And, just as for the original treatment, a number of intermediate positions is calculated to achieve a final desired position (which generally is the same desired final position of the original treatment path). Shells are then manufactured according to these newly determined intermediate positions. The originally manufactured shells are usually discarded, and potentially 10, 20 or more shells are newly manufactured.

It is an objective of the present disclosure to provide appliance, systems and methods that can at least partially overcome some of the aforementioned drawbacks.

### SUMMARY

According to a first aspect, an orthodontic appliance configured to fit a patient having teeth including one or more first teeth and one or more second teeth is provided. The orthodontic appliance comprises an integrally formed shell including a first shell part comprising one or more first cavities adapted to receive the first teeth of the patient, a second shell part comprising one or more second cavities adapted to receive the second teeth of the patient and a modified active shell part connecting the first shell part with the second shell part. The modified active shell part is at least partially not adapted to the teeth of the patient. A labial side and/or lingual side of the modified active shell part comprises one or more active elements to apply forces to the first shell part and/or the second shell part. The integrally formed shell is made by direct 3D printing.

In accordance with this aspect, an orthodontic appliance is provided which can be manufactured directly by an orthodontist having a 3D printer. The modified active shell parts of orthodontic appliance are not adapted to precisely fit the teeth of the patient, i.e. they may be oversized or smaller or otherwise modified with respect to the patient's teeth, such that specific forces can be exerted between the different part shells.

The inclusion of the active elements configured to apply specific forces to the first shell part and/or the second shell part makes it possible to increase the movements that can be achieved with a single shell. The number of intermediate positions and the time necessary to treat a malocclusion can be reduced. Maintaining a uniform thickness of the shell which can be achieved with 3D printing of an integrally formed shell helps to provide an effective, efficient and precise treatment.

The specific design of active elements by (locally) increasing or reducing the amount of material does not require the generation of specific molds.

Adaptation of a shell or shell part to a teeth of a patient may herein be regarded as the shape of the shell being adapted to the specific teeth of the patient. I.e. an inner volume of the shells may be adapted to fit precisely over the volume and outer surface of the teeth in question. E.g. the shells may be adapted to specific imperfections on the teeth of a specific patient. In case so-called attachments are used and attached to an outside surface of a tooth of a patient, adapting the shell includes providing a pocket or recess substantially corresponding the attachment.

A modified active shell part is at least partially not anatomically adapted to the one or more teeth it covers. This may herein be interpreted as a conscious deviation from the outer shape and size of the teeth of the patient. I.e. material is added at or removed from specific portions of the shell in order to not exactly over the teeth of the patient. Providing a pocket or recess for an attachment is herein not to be regarded as not being anatomically adapted to the teeth of the patient (because the attachment may be regarded as forming part of the anatomy of the patient, at least during the treatment).

The fact that the modified active shell part is described as "active" does not mean that the first and second shell parts cannot be active. To the contrary, the first and/or second shell parts may be configured to apply forces on the respective teeth that they cover. The term "active" shell part is herein used to denote that the active shell part includes specific active elements, and there are specific portions that are not anatomically adapted to the tooth/teeth of the patient.

In some examples, the active elements may be configured to push the first shell part away from the second shell part. Active elements may be used which have a shape and/or dimensions which are sized larger than the available space between the first and second shell part in a "natural" or "default" state. When the appliance is mounted over the teeth of the patient, the active element may be compressed and will thus have a tendency to expand and thereby push the shell parts away from each other.

In some examples, the active elements may be configured to pull the first shell part towards the second shell part. Active elements may be used which are shaped and sized smaller than the available space between the shell parts. When mounted over the teeth of the patient, the active elements may be stretched such that they have a tendency to return to their default state and pull the shell parts closer to each other.

In some examples, the active elements may have a length along the mesial-distal direction that is shorter than the length of the space between the first part shell and the second part shell. The active elements may be expendable. When fitted to a patient, the active element may be stretched. As a result, the first part shell and second part shell may be pulled towards each other, at an occlusal side, a lingual side, a labial side, or at multiple sides. Extra forces may thus be exerted on the first teeth and second teeth of the patient covered by the part shells.

In further examples, the active elements have a length along the mesial-distal direction that is longer than the length of the space between the first part shell and the second part shell. The active elements are compressible. In use, such active elements will push the first part shell (and the teeth covered by it) away from the second part shell (and the teeth covered by it).

One or more of the active elements may extend substantially along a mesial-distal direction. Alternatively, one or more of the active elements extend along a mesial-distal direction and along an occlusal-gingival direction or an lingual-labial direction. I.e. these active elements may be diagonally arranged. When a diagonally arranged active element exerts a pulling or pushing force, a rotational force may be exerted.

In some examples, at least one of the active elements extends in a direction perpendicular to the sides of the first and second part shells that it connects. E.g. the active elements may be bowed or curved outwards or inwards or may comprise corrugations or an accordion-like shape. Such active elements can provide for additional pushing force pushing part shells away from each other.

In some examples, the orthodontic appliance may comprise a third shell part comprising one or more third cavities adapted to receive third teeth of the patient and a second modified active shell part connecting the second shell part with the third shell part, and wherein a labial side and/or lingual side of the second modified active shell part comprises one or more active elements to apply forces to the second shell part and/or the third shell part. According to these examples, one or more teeth of the second shell part may be subjected to specific forces from either side of the second shell part.

In specific examples, an active element on a lingual side pushes against the second shell part, and an active element on a labial side pulls on the second shell part. In other specific examples, an active element on a labial sides pushes against the second shell part, and an active element on a lingual side pulls on the second shell part. In these examples, specific rotational moments may be applied to the teeth in the second shell part. In further examples, a pushing force may be provided at an occlusal portion of the tooth or teeth covered by the second shell part at a mesial side, and a pulling force may be provided at an occlusal portion at the distal side to establish an uprighting force. It should be clear that by acting on both sides, different desired forces and moments can be established.

In some examples, an occlusal side of the modified active shell part is anatomically adapted to the teeth of the patient. In some examples, the modified active shell part has one or more openings at an occlusal side. In these examples, there are no protrusions at an occlusal slide, such that the orthodontic appliance does not negatively affect contact between teeth in the mandible and teeth in the maxilla.

In a further aspect of the present disclosure, a method for manufacturing an orthodontic appliance is provided. The method comprises determining a virtual model of a plurality of teeth of a patient, the plurality of teeth including one or more first teeth, and one or more second teeth and further comprises determining a virtual model of the orthodontic appliance adapted to the virtual model of the plurality of teeth of the patient. The virtual model includes a virtual first shell part anatomically adapted to the first teeth, a virtual second shell part anatomically adapted to the second teeth, and a virtual modified active shell part that is at least partially not anatomically adapted to the teeth of the patient, and comprising one or more active elements at a labial side or lingual side and configured to apply forces to the first shell part and/or the second shell part. The method further comprises 3D printing the orthodontic appliance according to the virtual model of the orthodontic appliance.

In some examples, the method may further comprise determining the virtual model of the plurality of teeth of the patient comprises obtaining images from an intraoral scanner. Instead of an intra-oral scanner, a desktop scanner, CT-based scanner or plaster models may also be used. A plaster model may be digitalized for this purpose.

A virtual model of a patient's teeth may throughout the present disclosure be regarded as a digital version of one or more teeth of a patient. Typically, a virtual model may include both complete arches of a patient's teeth, and may include part of the patient's jaws and gums as well. A virtual model of patient's teeth may be visualized on a display and may be manipulated through a suitable electronic user interface. The virtual model may have different formats, and be purely graphical, or in some examples may be such that it can be used in e.g. calculations, simulations involving finite elements. The virtual model of a patient's teeth may be a digital rigid model (3D model), a polygon mesh, a NURBS model or similar.

In some examples, determining the virtual model of the orthodontic appliance comprises obtaining user input relating to a position and/or shape and/or size of the virtual shell. A professional may use a suitable user interface (mouse, keyboard, tactile screen, or other) to indicate which movement is desired and/or to design the orthodontic appliance. Obtaining user input may comprise a selection of a computer generated option and/or may include a selection of one or more active elements from a virtual library. If a number of active elements has been predefined in a virtual library, the specific properties of the active elements (e.g. the amount of force, and direction of force) that can be generated may have been previously determined as well. As an orthodontist may be determining a treatment path, he/she can take advantage of such previous knowledge to optimize the treatment, achieve a desired result as quickly as possible and reduce the chances of teeth deviating from the treatment path.

Computer generated suggestions may be derived e.g. from an algorithm obtained after deep learning.

According to a further aspect of the present disclosure, a computer-implemented method for generating an input file for a 3D printer is provided. The method comprises determining a virtual model of a plurality of teeth of a patient, and visualizing the virtual model of the plurality of teeth on a display. The method further comprises obtaining user input to select one or more first teeth, and one or more second teeth of the plurality of teeth of the patient and generating a virtual first part shell a virtual first part shell anatomically adapted to the first teeth, and a virtual second part shell anatomically adapted to the second teeth. The method further comprises obtaining user input to generate a virtual modified active shell that is at least partially not anatomically adapted to the teeth of the patient, and which comprises one or more active elements at a labial side or lingual side of the modified active shell and configured to apply forces to the first shell part and/or the second shell part. The method further comprises generating a virtual model of the orthodontic appliance including the virtual first part shell, the virtual second part shell and the virtual modified active shell part and generating an input file for a 3D printer based on the virtual model of the orthodontic appliance.

In a further aspect, a computer program is provided which comprises instructions which, when the program is executed by a computer, cause the computer to perform the method disclosed above. In a further aspect, a computer readable medium comprising the computer program stored thereon is provided. In a further aspect, a computer readable carrier carrying the computer program is provided.

In yet a further aspect, a computer system is provided which comprises a memory and a processor, wherein the processor is configured to carry out the method according to any of the examples disclosed herein.

In a further aspect of the present disclosure, an orthodontic kit is provided which comprises a series of consecutive shells, wherein the shells are configured to apply a corrective distal force to one or more of the teeth of the patient, and wherein the consecutive shells of the series are shaped to correspond to consecutive positions of the teeth in a desired treatment, and wherein at least one of the consecutive shells is an orthodontic appliance according to any of the examples herein disclosed.

In yet a further aspect, a method for manufacturing one or more or orthodontic appliances is provided. The method comprises determining a virtual model of a plurality of teeth of a patient and comparing the virtual model of the plurality of teeth of the patient with a virtual model according to a theoretical situation. The method comprises determining one or more virtual orthodontic appliances to achieve the theoretical situation based on the comparison between the theoretical situation and the virtual model of the teeth and manufacturing the orthodontic appliances according to the virtual orthodontic appliances.

In accordance with this aspect, a deviation from an original treatment may be corrected. If one or more teeth deviate from the original treatment path, a comparison may be made between an actual situation (as registered using e.g. an intraoral scanner) and a theoretical situation (the situation that should have been achieved according to the original treatment path). Rather than discarding all remaining previous generated shells, one or more "recovery" or "recapture" shells may be manufactured to achieve the theoretical situation, and from that point on the original treatment may be continued.

In some examples, manufacturing of the recovery shells may comprise 3D printing. An orthodontist may in his/her own practice design and manufacture one or more recovery shells. In other examples, the classic method of manufacturing shells involving e.g. 3D printed molds, and vacuum forming may be used.

Various aspects may be combined with each other. Examples of various of the different aspects may be combined with each other. Additional objects, advantages and features of embodiments of the disclosure will become apparent to those skilled in the art upon examination of the description or may be learned by practice of the invention.

### BRIEF DESCRIPTION OF THE DRAWINGS

Particular embodiments of the present invention will be described in the following by way of non-limiting examples, with reference to the appended drawings, in which:
Figures 1A - 1B illustrates some of the terminology used herein;
Figure 2 illustrates an example of an orthodontic appliance according to an example of the present disclosure;
Figures 3 and 4 illustrate further examples of orthodontic appliances;
Figures 5A schematically illustrates a prior art example of an orthodontic appliance, and figures 5B - 5F schematically illustrate further examples of orthodontic appliances and the specific forces generated by the active elements in these examples;
Figure 6 illustrates an example of a computer-implemented method for generating an input file for a 3D printer; and
Figures 7 and 8 schematically a method for manufacturing one or more "recovery" shells, and a method for generating an input file for a 3D printer in order to manufacture such recovery shells.

### DETAILED DESCRIPTION OF EMBODIMENTS

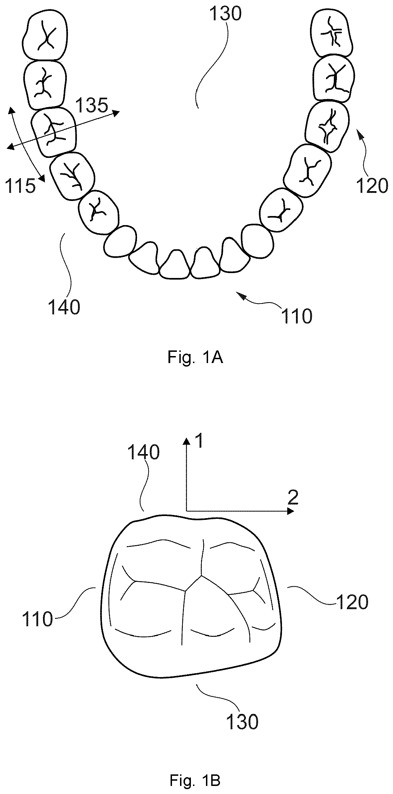

Figure 1A schematically illustrates the arrangement of teeth in the lower jaw (mandible). A front portion of the mouth 110 may be referred to as a mesial region. A rear portion of the mouth 120 may be referred to as a distal region. An inner portion of the mouth behind the teeth 130 may be referred to as a lingual region. An outer portion of the mouth 140 may be referred to as a labial region. A mesial-distal direction 115 with respect to a specific tooth (first molar) has been schematically indicated in figure 1A. Also indicated in figure 1A is a lingual-labial direction 135 with respect to the same tooth. This terminology will be adhered to in the present disclosure.

Figure 1B schematically illustrates a molar. A mesial side of the molar is indicated by reference sign 110, whereas a distal side of the molar is indicated with reference sign 120. Reference signs 130 and 140 respectively indicate the lingual and labial sides of the molar.

In the present disclosure, a first axis is defined as an axis substantially perpendicular to a base surface of a distal element attached to a lingual surface of the molar. In figure 1B, the first axis is indicated with reference sign 1. A second axis may be defined as extending along the mesial-distal direction substantially parallel to the base surface of the distal element. The second axis 2 is perpendicular to the first axis 1.

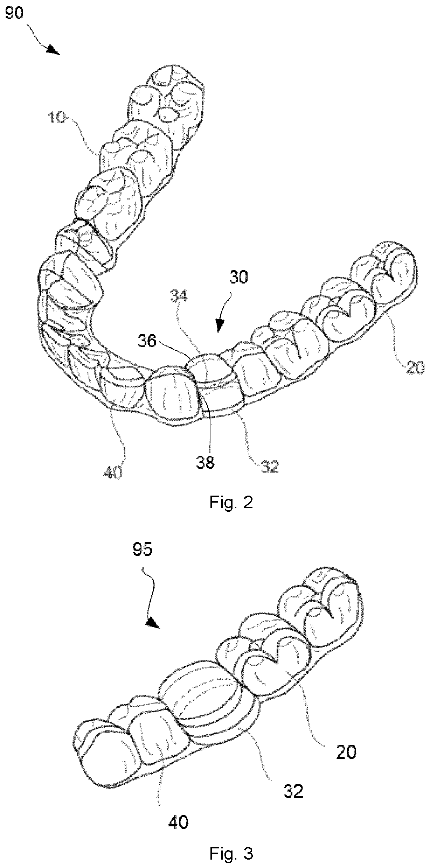

Figure 2 illustrate an example of an orthodontic appliance 90. The orthodontic appliance 90 is configured to fit a patient having teeth including one or more first teeth and one or more second teeth. The orthodontic appliance 90 is an integrally formed shell, which includes a first shell part 20 comprising one or more first cavities adapted to receive the first teeth of the patient. It further comprises a second shell part 40 comprising one or more second cavities adapted to receive the second teeth of the patient; and a first modified active shell part 30 connecting the first shell part 30 with the second shell part 40.

In this specific example, a labial side and a lingual side of the modified active shell part 30 comprises one or more active elements 32, 34, 36, 38 to apply forces to the first shell part 20 and the second shell part 40. As may be seen in figure 2, the modified active shell part 30 is at least partially not adapted to the teeth of the patient. The integrally formed shell is made by direct 3D printing.

In this specific example, there are two active elements 32, 34 at a labial side of the shell, and there are two active elements 36, 38 at a lingual side of the shell. In this particular case, the occlusal side of the shell of the modified active shell part 30 is open i.e. there is no material. Any negative effect of closing of the maxilla on the mandible that might be caused by the material of two shells on top of each other can be avoided. IN other examples, the occlusal side of the shell may be closed i.e. it may conform to the tooth or teeth of the modified active shell part.

In this specific example, all active elements are the same or substantially similar. They extend generally along a mesial-distal direction and are slightly bowed outwards i.e. they may be regarded as too long for the space available. When the orthodontic appliance is fitted on the arch of teeth, the active elements 32, 34, 36, 38 may be somewhat compressed, and they therefore apply forces on the first shell part 20 and the second shell part 40, pushing both shell parts away from each other. Such forces are transmitted to the corresponding segments of teeth.

In this example, the modified active shell part bridges a space between the first shell part 20 and the second shell part 40, and wherein the space corresponds to one tooth of the patient. In other examples, the modified active shell part may cover two or more teeth. In further examples, the modified active shell part may bridge a space that is wider than a single tooth, but narrower than two teeth.

Figure 3 illustrates a further example of an orthodontic appliance according to the present disclosure. The orthodontic appliance 95 of figure 3 is generally similar to the example shown in figure 2. Also in this case, similarly shaped active elements are included in the modified active shell part. In figure 2, the integrally formed shell is configured to cover all teeth of an arch of the patient. In the example of figure 3, the integrally formed shell is configured to cover only a segment of teeth of the patient. In particular examples, the segment of teeth may be a lateral posterior sector and may cover e.g. 4 - 6 teeth, extending from a canine or premolar to a molar.

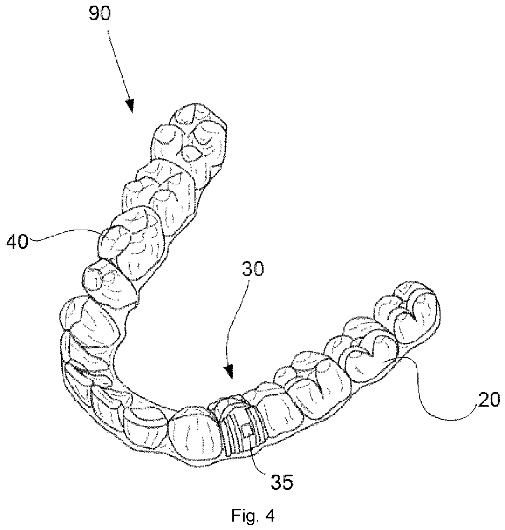

In the example of figure 4, yet a further example of an orthodontic appliance 90 is illustrated. The orthodontic appliance 90 again comprises a first shell part 20. The first shell part 20 is substantially anatomically adapted to first teeth on which it is to be arranged. Similarly, the orthodontic appliance 90 includes a second shell part 40 anatomically adapted to the second plurality of teeth.

The orthodontic appliance 90 further comprises a modified active shell part 30 which connects and is arranged in between the first shell part 20 and the second shell part 40. The modified active shell part in this example again extends over about a width of a single tooth.

A first difference between the modified active shell part 30 of this example and the previously illustrated examples is that the modified active shell part 30 includes an occlusal portion to cover the occlusal surface of the corresponding tooth.

In this specific example, a tooth covered by the modified active shell part comprises a so-called attachment. The orthodontic appliance 90 may include a corresponding pocket or recess 35.

An attachment may be regarded as an element configured to convert a structure, e.g. a tooth, of scarce retentivity (little capability to retain, in this case, a shell) into a structure of appropriate retentivity (with more or increased capability to retain) when bonded to the structure. Bonding one or more attachments to the teeth generally provides an enhanced surface upon which the shell can act. Such an improved surface may not only help to retain a shell in a desired position around an arch of teeth, but also to increase and direct a transfer of forces between the shell and the teeth. This can enable performing complicated teeth movements and/ or to complete some teeth movements which would not be performed in the absence of the attachments.

In the example of figure 4, the modified active shell part comprises corrugations. The corrugations may be provided on either side of the attachment. In use, when the appliance 90 is fitted over an arch of teeth of the patient, the protrusions may be slightly compressed. The corrugations may have a tendency to open up, and on either side of the attachment, the corrugations may push the first shell part 20 away from the attachment, and may push the second shell part 20 away from the attachment.

The corrugations may thus be regarded as the active elements of this example. In examples, the corrugations may be provided on both a lingual and a labial side. In other examples, the corrugations are provided only at the labial side or only at the lingual side.

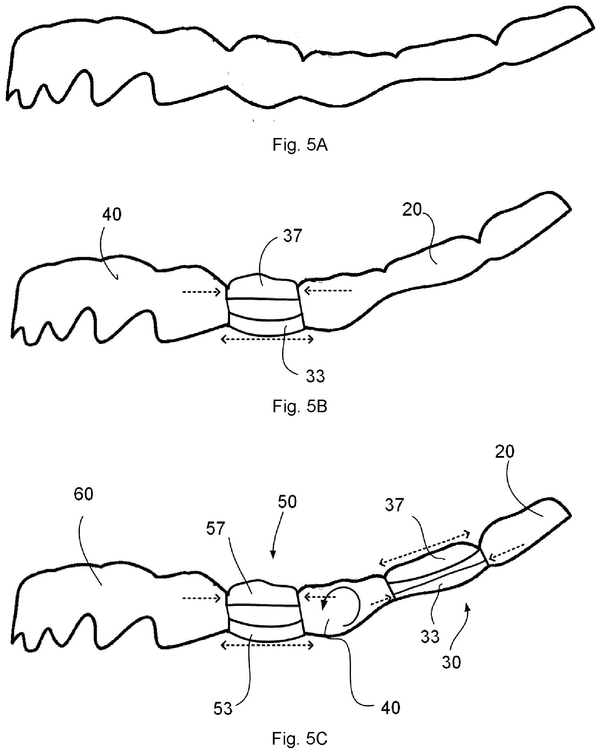

Figure 5A schematically illustrates a side view of a prior art example of an orthodontic appliance or orthodontic shell. Figures 5B - 5F schematically illustrate further examples of orthodontic appliances and the specific forces generated by the active elements in these examples. In each of figures 5B - 5F a simplified view of the orthodontic appliance is shown, and in each of these figures a side view is provided.

In the example of figure 5B, the modified active shell part includes at least active elements at a labial side. In this example, the active element 33 may be oversized with respect to the available space, whereas active element 37 is sized to small with respect to the space available. Active element 33 may thus push the shell parts away from each other, whereas active element may pull the shell parts 20, 40 towards each other.

In the example of figure 5C, the orthodontic appliance, comprises a first shell part 20, a second shell part 40, and a modified active shell part in between. In addition, the orthodontic appliance further comprises a third shell part 60 comprising one or more third cavities adapted to receive third teeth of the patient and a second modified active shell part 50 connecting the second shell part 40 with the third shell part 60. A labial side and/or lingual side of the second modified active shell part 50 comprises one or more active elements 53, 57 to apply forces to the second shell part 40 and the third shell part 60.

In this specific example, the objective may be to apply a moment to a tooth covered by the second shell part 40. To this end, at the occlusal side of the second modified active shell part 50 a pushing force may be applied by the first shell part 20 to the second shell part 40. At the same time, a pulling force may be applied by the first shell part 20 at a gingival side of the tooth.

For the third shell part, the situation may be exactly opposite. As a result, a moment is applied to the tooth of the second shell part. Such a moment may be used e.g. when an uprighting of a specific tooth or for specific teeth is desired.

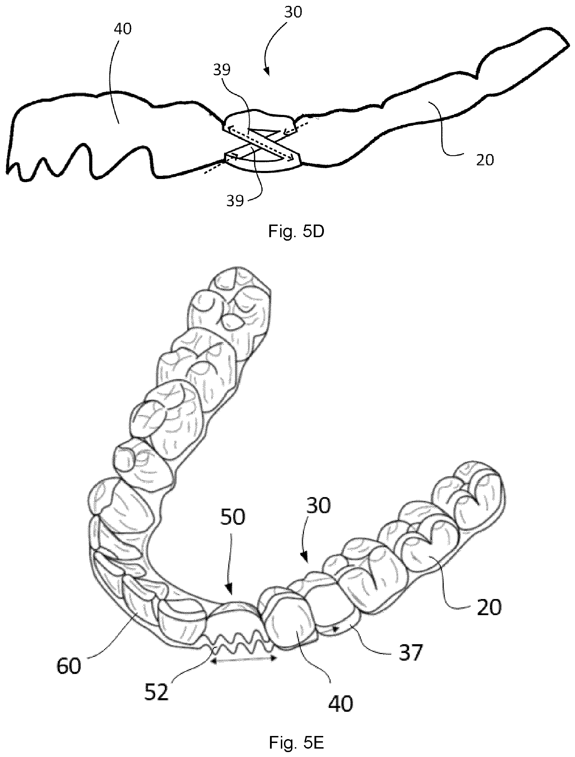

Figure 5D illustrates yet another example of a modified active shell part 30 comprising substantially diagonally extending active elements 39.I.e. the active elements of this example extend along the mesial-distal direction as well as along the occlusal-gingival direction.

In examples, the active elements may be arranged on top of each other and may cross over each other. A length of the diagonally extending active elements may determine whether a pulling or pushing force is applied.

It should be clear that in any of these examples, one or more of the active elements may have a round, oval, circular, triangular or polygonal cross-section. A thickness of one of the active elements may be different from a thickness of another of the active elements. Direct printing offers the advantage of being able to adapt the active elements and the overall orthodontic appliance to specific needs.

In general, the dimensions, shape, thickness, cross-section and others be adaptable. I.e. the active elements may have been parametrized. A user might select one or more active elements from a library and provide input as to length, width, thickness, ratios of certain dimensions. In some cases, a user might further select a specific type of resin to be used in the manufacture of specific active elements.

Figure 5E illustrates yet a further example, comprising first shell part 20, second shell part 40, and third shell part 60. It further comprises first and second modified active shell parts 30, 50. In this specific example, active element 52 at a gingival side of the second modified active shell 50 may have a sinusoidal shape. Other suitable shapes to achieve a similar effect include e.g. a wave shape, a zigzag shape. A pushing force may be applied to the second shell part 40 at the labial side. At the same time, a pushing force might be generated at the lingual side pushing the second shell part in the opposite direction. A rotation around the palatal root of one of the teeth may be achieved.

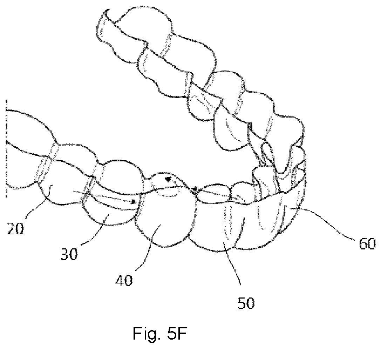

Figure 5F illustrates a rather similar appliance. It may be seen in figure 5F how a rotation of a specific tooth can be achieved.

In all the illustrated examples, the integrally formed shell may be made by direct 3D printing using a polymer resin, particularly a shape memory polymer resin. In some examples, one or more of the active elements are printed with a second resin, different from the first resin. Customization of the modified active shell parts may also include the choice of resin for printing for the overall appliance and/or for specific parts of the appliance.

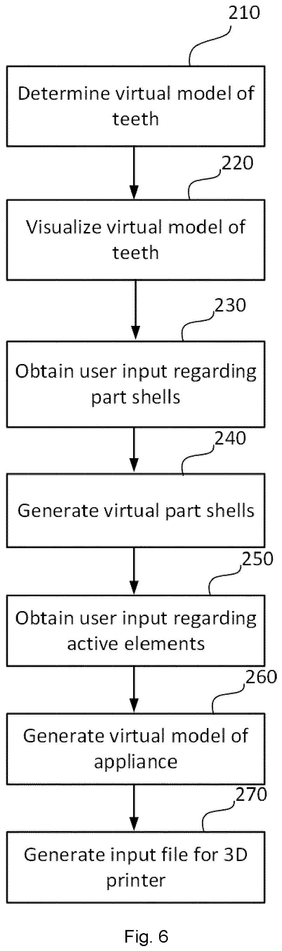

Figure 6 illustrates an example of a method for generating an input file for a 3D printer. The method comprises, at block 210, determining a virtual model of a plurality of teeth of a patient, the plurality of teeth including one or more first teeth, and one or more second teeth. A virtual model may be received by a computer or software by downloading from a database (the virtual model having been established using another computer program), through direct connection with an intraoral scanner or with any other known means.

The method further comprises, at block 220, visualizing the virtual model of the plurality of teeth on a display, and at block 230, obtaining user input to select one or more first teeth, and one or more second teeth of the plurality of teeth of the patient. The virtual model of the plurality of teeth of a patient may be visualized on a monitor of a laptop computer or to a monitor of a desktop computer. In further examples, tablets or other screens or displays may be used.

Obtaining, at block 230, user input may include the identification or selection of teeth that may be included in different shell parts, e.g. different teeth or segments of teeth that may be received in the first and second (and optionally) third shell part, and different teeth or segments of teeth that may be received in the modified active shell parts.

The method further comprises, at block 240, generating a virtual first part shell a virtual first part shell anatomically adapted to the first teeth, and a virtual second part shell anatomically adapted to the second teeth.

The method further comprises, at block 250, obtaining user input to generate a virtual modified active shell that is at least partially not anatomically adapted to the teeth of the patient, and which comprises one or more active elements at a labial side or lingual side of the modified active shell part and configured to apply forces to the first shell part and/or the second shell part.

User input at this stage may further include the composition or design of the active elements included in the modified active shell parts. As mentioned before, some of the active elements may have been previously defined in a library and a user can select e.g. through a dropdown menu structure. Alternatively, or additionally, active elements may be designed by the user within the program.

Even though in this specific method, user input is identified at two separate stages, it should be clear that both stages may be combined into a single stage of obtaining user input.

Obtaining user input (at both illustrated instances) may comprise a selection of a computer generated option. I.e. based on the virtual model of the teeth, a computer may generate suggestions for which teeth to include in different part shells, and for which active elements to use.

At block 260, a virtual model of the orthodontic appliance including the virtual first part shell, the virtual second part shell and the virtual modified active shell part is generated. Such a virtual model may be visualized on a screen in some cases.

At block 270, based on the generated virtual model of the appliance, an input file for a 3D printer may be generated. Such an input file may be sent to an orthodontist office or directly to a 3D printer connected to the computing system. The input file may be an .stl file, but files in other suitable electronic formats for 3D printing may also be used.

The method may further comprise 3D printing the orthodontic appliance according to the virtual model of the orthodontic appliance.

Even though the steps of the flowchart imply a specific sequence of steps, this sequence of steps should not be interpreted as limiting. In particular, user input may be obtained at different moments, and the generation of the virtual model of the orthodontic appliance may occur in various steps, and may be readjusted with new user input or the generation of the virtual model of the appliance may occur in a single step after having obtained all input.

In some examples, more than one modified active shell part may be included in the orthodontic appliance. The virtual model of the orthodontic appliance may include a virtual third shell part comprising one or more third cavities adapted to receive third teeth of the patient and also include a virtual second modified active shell part connecting the second shell part with the third shell part. A labial side and/or lingual side of the second modified active shell part comprises one or more active elements to apply forces to the second shell part and/or the third shell part.

In some examples, the teeth of the patient include one or more fourth teeth arranged in an arch between the first teeth and second teeth, and the virtual modified active shell part can be (only) partially anatomically adapted to the fourth teeth of the patient.

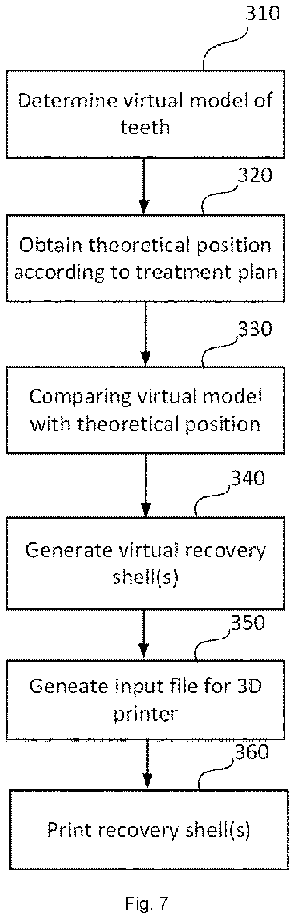

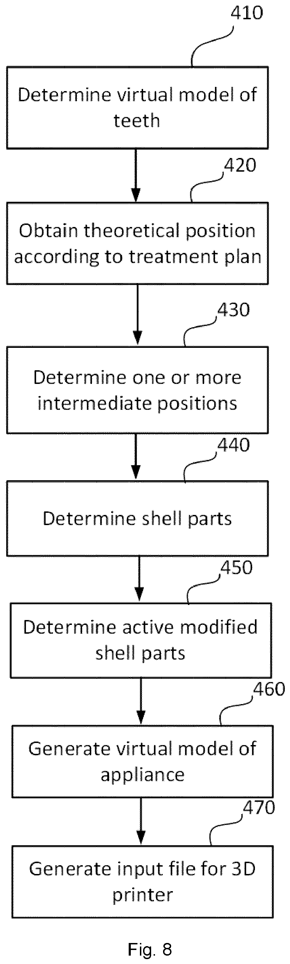

Figure 7 schematically illustrates a method for manufacturing one or more "recovery" shells. Figure 8 illustrates and a computer-implemented method for generating an input file for a 3D printer in order to manufacture such recovery shells.

An original treatment plan involving e.g. 20 - 30 intermediate positions, and corresponding shells may have been drawn up. In examples, one or more of the shells may include modified active shell parts as illustrated herein. In other examples, all shells are prior art shells.

At some point of the treatment, an orthodontist may realize that not all teeth are moving according to the treatment plan. In accordance with figure 7, at block 310, a virtual model of the teeth of the patient may be determined. As already explained herein, one preferred option for obtaining such a virtual model includes the use of an intraoral scanner.

At block 320, the theoretical position according to the (original) treatment plan may be obtained or determined. Such a theoretical position may have been stored e.g. in the online platform originally used to design the treatment path and the original shells.

A comparison can then be made, at block 330, between the theoretical position according to the original treatment plan and the actual situation captured in the virtual model of the teeth of the patient. A computer may match the theoretical position with the actual position and may be able to precisely highlight which teeth have deviated from the original plan i.e. for which teeth the shells according to the original treatment path are not properly adapted to the anatomy of the patient anymore. The identification of the deviations may be manual, i.e. by an orthodontist or professional, or may be automated.

Then, at block 340, one or more virtual orthodontic appliances to achieve the theoretical situation based on the comparison between the theoretical situation and the virtual model of the teeth may be designed or determined. An algorithm (based on deep learning, artificial intelligence or not) may suggest or generate one or more appliances that will allow to revert to the original treatments. Such appliances may be regarded as "recovery" shells. Such recovery shells may or may not include the modified active shell parts as explained herein. Automatically generated appliances or computer generated suggestions may be modified by a professional in some examples. I.e. a professional may change an active element, may add an attachment or other.

Then, the orthodontic appliances may be manufactured according to the virtual orthodontic appliances. In some examples, an input file for a 3D printer may be generated at block 350, and the appliances may be directly printed. In further examples, 3d models of the teeth in different positions may be printed as molds and thermoforming may be used.

In some examples, determining one or more virtual orthodontic appliances includes a (new) treatment planning assuming a starting position of the teeth according to the virtual model of the plurality of teeth and assuming a desired end position of the teeth according to the virtual model of the theoretical situation. The new treatment planning may further include calculating one or more intermediate positions. I.e. the new treatment planning may be very similar in nature as the original treatment planning. As a starting position, the current actual position of the teeth may be used, and as an end position, the intermediate position of the original treatment path may be used. E.g. after wearing the recovery shells for e.g. 2-4 weeks, the original treatment may be continued using the originally manufactured appliances. Unnecessary discarding of appliances can thus be avoided.

As mentioned before, the recovery shells may include the modified active parts described herein. In examples, the method may thus comprise visualizing the virtual model of the plurality of teeth on a display and visualizing a virtual model of the plurality of teeth according to the theoretical situation and obtaining user input to select one or more first teeth, and one or more second teeth of the plurality of teeth of the patient so as to generate a virtual first part shell a virtual first part shell anatomically adapted to the first teeth, and a virtual second part shell anatomically adapted to the second teeth. Optionally the method may further comprise obtaining user input to generate a virtual modified active shell that is at least partially not anatomically adapted to the teeth of the patient, and which comprises one or more active elements at a labial side or lingual side of the modified active shell part and configured to apply forces to the first shell part and/or the second shell part. Finally, a virtual model of the orthodontic appliance including the virtual first part shell, the virtual second part shell and the virtual modified active shell part may be generated.

Figure 8 illustrates and a computer-implemented method for generating an input file for a 3D printer in order to manufacture such recovery shells. In accordance with figure 8, at block 410, a virtual model of the teeth may be obtained or generated. As block 420, a theoretical position of the teeth according to the original treatment plan may be obtained or otherwise determined.

In conventionally known ways, one or more intermediate positions may be determined at block 430 to arrive at the theoretical position. Based on the intermediate positions, at block 440, (non-modified) shell parts may be generated, and at block 450, active modified shell parts may be generated. The shell parts and modified active shell parts may be generated in accordance with any of the examples disclosed herein. It should be clear that this is just an example, as also "conventional" shells may be used.

As described in the present disclosure, a virtual model of the appliance can be generated at block 460, which can then be manufactured. In one example, one or more input filed for a 3D printer may be generated at block 470.

Examples of the computer-implemented methods may be implemented with hardware, software, firmware and combinations thereof. Those of skill in the art would further appreciate that the various illustrative logical blocks, modules, circuits, and algorithm steps described in connection with these methods may be implemented as electronic hardware, computer software, or combinations of both. To clearly illustrate this interchangeability of hardware and software, various illustrative components, blocks, modules, circuits, and steps have been described above with respect to the methods generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the methods may be implemented or performed with one or more general-purpose processors, a digital signal processor (DSP), cloud computing architecture, an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In a further aspect of the disclosure, a computer program is provided. The computer program comprises instructions which, when the program is executed by a computer, cause the computer to perform one of the methods illustrated herein. A computer carrier or readable medium having stored thereon the computer program is also provided. In yet a further aspect of the disclosure, a computer system is provided. The computer system comprises a memory and a processor. The processor is configured to carry out the method 100.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another.

A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor.

Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

For reasons of completeness, a number of aspects of the present disclosure is set out in the following numbered clauses:
Clause 1. An orthodontic appliance configured to fit a patient having teeth including one or more first teeth and one or more second teeth, and comprising:
   an integrally formed shell including
      a first shell part comprising one or more first cavities adapted to receive the first teeth of the patient;
      a second shell part comprising one or more second cavities adapted to receive the second teeth of the patient; and
         a first modified active shell part connecting the first shell part with the second shell part, and wherein a labial side and/or lingual side of the modified active shell part comprises one or more active elements to apply forces to the first shell part and/or the second shell part, wherein
   the modified active shell part is at least partially not adapted to the teeth of the patient, and
   wherein the integrally formed shell is made by direct 3D printing.
Clause 2. The orthodontic appliance of clause 1, further comprising a third shell part comprising one or more third cavities adapted to receive third teeth of the patient; and
   a second modified active shell part connecting the second shell part with the third shell part, and wherein
   a labial side and/or lingual side of the second modified active shell part comprises one or more active elements to apply forces to the second shell part and/or the third shell part.
Clause 3. The orthodontic appliance of clause 1 or 2, wherein one or more of the active elements are configured to push the first shell part away from the second shell part.
Clause 4. The orthodontic appliance of any of clauses 1 - 3, wherein one or more of the active elements are configured to pull the first shell parts to the second shell part.
Clause 5. The orthodontic appliance of any of clauses 1 - 4, wherein an active element on a lingual side pushes against the second shell part, and an active element on a labial side pulls on the second shell part.
Clause 6. The orthodontic appliance of any of clauses 1 - 4, wherein an active element on a labial sides pushes against the second shell part, and an active element on a lingual side pulls on the second shell part.
Clause 7. The orthodontic appliance of any of clauses 1-6, wherein an occlusal side of the modified active shell part is anatomically adapted to the teeth of the patient.
Clause 8. The orthodontic appliance of any of clauses 1 - 6, wherein the modified active shell part has one or more openings at an occlusal side.
Clause 9. The orthodontic appliance of any of clauses 1 - 8, wherein the modified active shell part is configured to bridge a space between the first shell part and the second shell part, and wherein the space corresponds to one or more teeth of the patient, specifically to one tooth of the patient.
Clause 10. The orthodontic appliance of any of clauses 1-9, wherein the integrally formed shell is configured to cover all teeth of an arch of the patient.
Clause 11. The orthodontic appliance of any of clauses 1-9, wherein the integrally formed shell is configured to cover only a segment of teeth of the patient.
Clause 12. The orthodontic appliance of any of clauses 1 - 11, wherein one or more of the active elements extend substantially along a mesial-distal direction.
Clause 13. The orthodontic appliance of any of clauses 1 - 12, wherein one or more of the active elements extend along an occlusal-gingival direction.
Clause 14. The orthodontic appliance of any of clauses 1 - 13, wherein at least one of the active elements extends in a direction perpendicular to the sides of the first and second shell parts that it connects.
Clause 15. The orthodontic appliance of any of clauses 1 - 14, wherein one of the active elements crosses over another of the active elements.
Clause 16. The orthodontic appliance of any of clauses 1 - 15, wherein one or more of the active elements has a round, oval, circular, triangular or polygonal cross-section.
Clause 17. The orthodontic appliance of any of clauses 1 - 16, wherein a thickness of one of the active elements is different from a thickness of another of the active elements.
Clause 18. The orthodontic appliance of any of clauses 1 - 17, wherein the integrally formed shell is made by direct 3D printing using a polymer resin, particularly a shape memory polymer resin.
Clause 19. The orthodontic appliance of clause 18, wherein the first and second shell parts are printed with a first resin, and wherein one or more of the active elements are printed with a second resin, different from the first resin.
Clause 20. A method for manufacturing an orthodontic appliance;
   determining a virtual model of a plurality of teeth of a patient, the plurality of teeth including one or more first teeth, and one or more second teeth;
   determining a virtual model of the orthodontic appliance adapted to the virtual model of the plurality of teeth of the patient, wherein the virtual model includes
   a virtual first shell part anatomically adapted to the first teeth,
   a virtual second shell part anatomically adapted to the second teeth, and
   a virtual modified active shell part that is at least partially not anatomically adapted to the teeth of the patient, and comprising one or more active elements at a labial side or lingual side and configured to apply forces to the first shell part and/or the second shell part; and
   3D printing the orthodontic appliance according to the virtual model of the orthodontic appliance.
Clause 21. The method of clause 20, wherein the virtual model of the orthodontic appliance includes a virtual third shell part comprising one or more third cavities adapted to receive third teeth of the patient; and
   a virtual second modified active shell part connecting the second shell part with the third shell part, and wherein
   a labial side and/or lingual side of the second modified active shell part comprises one or more active elements to apply forces to the second shell part and/or the third shell part.
Clause 22. The method of clause 20 or 21, wherein the teeth of the patient include one or more fourth teeth arranged in an arch between the first teeth and second teeth, and optionally wherein the virtual modified active shell part is partially anatomically adapted to the fourth teeth of the patient.
Clause 23. The method of any of clauses 20 - 22, wherein determining the virtual model of the plurality of teeth of the patient comprises obtaining images from an intraoral scanner.
Clause 24. The method of any of clauses 20 - 23, wherein determining the virtual model of the orthodontic appliance comprises obtaining user input relating to a position and/or shape and/or size of the virtual modified active shell part.
Clause 25. The method of clause 24, wherein obtaining user input comprises a selection of a computer generated option.
Clause 26. The method of clause 24 or 25, wherein the user input includes a selection of one or more active elements from a virtual library.
Clause 27. A computer-implemented method for generating an input file for a 3D printer, the method comprising:
   determining a virtual model of a plurality of teeth of a patient;
   visualizing the virtual model of the plurality of teeth on a display;
   obtaining user input to select one or more first teeth, and one or more second teeth of the plurality of teeth of the patient;
   generating a virtual first part shell a virtual first part shell anatomically adapted to the first teeth, and a virtual second part shell anatomically adapted to the second teeth;
   obtaining user input to generate a virtual modified active shell that is at least partially not anatomically adapted to the teeth of the patient, and which comprises one or more active elements at a labial side or lingual side of the connecting shell and configured to apply forces to the first shell part and/or the second shell part;
   generating a virtual model of the orthodontic appliance including the virtual first part shell, the virtual second part shell and the virtual modified active shell part; and
   generating an input file for a 3D printer based on the virtual model of the orthodontic appliance.
Clause 28. The method according to clause 27, wherein the user input to generate the virtual modified active shell part comprises a selection from a library of predefined active elements.
Clause 29. The method according to clause 27 or 28, comprising determining desired movements of one or more teeth of the patient.
Clause 30. The method according to clause 29, further comprising:
   suggesting one or more of the following: first teeth, second teeth, virtual modified active shell part, active elements.
Clause 31. The method of clause 30, wherein obtaining user input comprises selection by a user from a plurality of suggested options.
Clause 32. The method of any of clauses 27 - 31, wherein the input file for the 3D printer is in one of the following formats: .stl, .obj, .gcode, .amf, .vrml, .ply, .fbx, .3mf.
Clause 33. The method of any of clauses 27 - 32, wherein determining the virtual model of the plurality of teeth of the patient comprises obtaining input from an intraoral scanner.
Clause 34. The method of any of clauses 27 - 33, wherein determining the virtual model of the plurality of teeth of the patient comprises determining an initial position of the plurality of teeth of the patient in a treatment and calculating an intermediate position of the plurality of teeth in the treatment.
Clause 35. The method of clause 34, wherein calculating the intermediate position comprises calculating an effect of the active elements on a movement of one or more of the teeth of the patient.
Clause 36. The method of any of clauses 27 - 35, wherein the plurality of teeth further comprises one or more fourth teeth arranged in an arch between the first teeth and second teeth.
Clause 37. The method of clause 37, wherein the modified active shell part is partially anatomically adapted to the fourth teeth.
Clause 38. The method of any of clauses 27 - 37, further comprising 3D printing the orthodontic appliance with the generated input file.
Clause 39. An orthodontic kit, comprising: a series of consecutive shells, wherein the shells are configured to apply a corrective distal force to one or more of the teeth of the patient, and wherein the consecutive shells of the series are shaped to correspond to consecutive positions of the teeth in a desired treatment, and wherein at least one of the consecutive shells is an orthodontic appliance according to any of clauses 1 - 19.
Clause 40. A method for manufacturing one or more or orthodontic appliances, comprising:
   determining a virtual model of a plurality of teeth of a patient;
   comparing the virtual model of the plurality of teeth of the patient with a virtual model according to a theoretical situation;
   determining one or more virtual orthodontic appliances to achieve the theoretical situation based on the comparison between the theoretical situation and the virtual model of the teeth; and
   manufacturing the orthodontic appliances according to the virtual orthodontic appliances.
Clause 41. The method of clause 40, wherein determining one or more virtual orthodontic appliances includes a treatment planning assuming a starting position of the teeth according to the virtual model of the plurality of teeth and assuming a desired end position of the teeth according to the virtual model of the theoretical situation.
Clause 42. The method of clause 41, wherein the treatment planning further includes calculating one or more intermediate positions.
Clause 43. The method of any of clauses 40 - 42, wherein the manufacturing comprises:
   generating one or more input files for a 3D printer of the determined virtual orthodontic appliances; and
   3D printing the orthodontic appliances using the generated input files.
Clause 44. The method of any of clauses 40 - 43, wherein the manufacturing comprises producing one or more molds; and thermoforming the orthodontic appliances using the molds.
Clause 45. The method of clause 44, wherein the molds are manufactured using 3D printing.
Clause 46. The method of any of clauses 40 - 45, wherein at least one of the orthodontic appliances is an orthodontic appliance according to any of clauses 1 - 19.
Clause 47. The method of any of clauses 40 - 46, wherein determining one or more virtual orthodontic appliances to achieve the theoretical situation is derived from an algorithm trained by deep learning.
Clause 48. The method of any of clauses 40 - 47, further comprising:
   visualizing the virtual model of the plurality of teeth on a display;
   visualizing a virtual model of the plurality of teeth according to the theoretical situation:
      obtaining user input to select one or more first teeth, and one or more second teeth of the plurality of teeth of the patient;
      generating a virtual first part shell a virtual first part shell anatomically adapted to the first teeth, and a virtual second part shell anatomically adapted to the second teeth;
      obtaining user input to generate a virtual modified active shell that is at least partially not anatomically adapted to the teeth of the patient, and which comprises one or more active elements at a labial side or lingual side of the modified active shell part and configured to apply forces to the first shell part and/or the second shell part;
      generating a virtual model of the orthodontic appliance including the virtual first part shell, the virtual second part shell and the virtual modified active shell part.
Clause 49. The method of any of clauses 40 - 48, wherein the theoretical situation is retrieved from an electronic storage of an original treatment path.
Clause 50. A computer program comprising instructions which, when the program is executed by a computer, cause the computer to perform the method of any of clauses 27 - 38, or to perform the computer-implemented steps of any of clauses 20 - 26 or 40 - 49.
Clause 51. A computer readable medium comprising the computer program of clause 50 stored thereon.
Clause 52. A computer readable carrier carrying the computer program of clause 51.
Clause 53. A computer system comprising a memory and a processor, wherein the processor is configured to carry out the method according to any of clauses 27 - 38, or to perform the computer-implemented steps of any of clauses 20 - 26 or 40 - 49.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. An orthodontic appliance configured to fit a patient having teeth including one or more first teeth and one or more second teeth, and comprising:
an integrally formed shell including
a first shell part comprising one or more first cavities adapted to receive the first teeth of the patient;
a second shell part comprising one or more second cavities adapted to receive the second teeth of the patient; and
a first modified active shell part connecting the first shell part with the second shell part, and wherein a labial side and/or lingual side of the modified active shell part comprises one or more active elements to apply forces to the first shell part and/or the second shell part, wherein
the modified active shell part is at least partially not adapted to the teeth of the patient, and
wherein the integrally formed shell is made by direct 3D printing.

2. The orthodontic appliance of claim 1, further comprising a third shell part comprising one or more third cavities adapted to receive third teeth of the patient; and
a second modified active shell part connecting the second shell part with the third shell part, and wherein
a labial side and/or lingual side of the second modified active shell part comprises one or more active elements to apply forces to the second shell part and/or the third shell part.

3. The orthodontic appliance of claim 1, wherein an active element on a lingual side pushes against the second shell part, and an active element on a labial side pulls on the second shell part, or wherein an active element on a labial sides pushes against the second shell part, and an active element on a lingual side pulls on the second shell part.

4. The orthodontic appliance of any of claims 1-3, wherein an occlusal side of the modified active shell part is anatomically adapted to the teeth of the patient.

5. The orthodontic appliance of any of claims 1-3, wherein the modified active shell part has one or more openings at an occlusal side.

6. The orthodontic appliance of any of claims 1 - 5, wherein the integrally formed shell is configured to cover all teeth of an arch of the patient.

7. The orthodontic appliance of any of claims 1-5, wherein the integrally formed shell is configured to cover only a segment of teeth of the patient.

8. The orthodontic appliance of any of claims 1-7, wherein the integrally formed shell is made by direct 3D printing using a polymer resin.

9. A method for manufacturing an orthodontic appliance;
determining a virtual model of a plurality of teeth of a patient, the plurality of teeth including one or more first teeth, and one or more second teeth;
determining a virtual model of the orthodontic appliance adapted to the virtual model of the plurality of teeth of the patient, wherein the virtual model includes
a virtual first shell part anatomically adapted to the first teeth,
a virtual second shell part anatomically adapted to the second teeth, and
a virtual modified active shell part that is at least partially not anatomically adapted to the teeth of the patient, and comprising one or more active elements at a labial side or lingual side and configured to apply forces to the virtual first shell part and/or the virtual second shell part; and
3D printing the orthodontic appliance according to the virtual model of the orthodontic appliance.

10. The method of claim 9, wherein the virtual model of the orthodontic appliance includes a virtual third shell part comprising one or more third cavities adapted to receive third teeth of the patient; and
a virtual second modified active shell part connecting the virtual second shell part with the virtual third shell part, and wherein
a labial side and/or lingual side of the virtual second modified active shell part comprises one or more active elements to apply forces to the second shell part and/or the third shell part.

11. The method of claim 9 or 10, wherein determining the virtual model of the orthodontic appliance comprises obtaining user input relating to a position and/or shape and/or size of the virtual modified active shell.

12. The method of claim 10 or 11 ,wherein the user input includes a selection of one or more active elements from a virtual library.

13. A computer-implemented method for generating an input file for a 3D printer, the method comprising:
determining a virtual model of a plurality of teeth of a patient;
visualizing the virtual model of the plurality of teeth on a display;
obtaining user input to select one or more first teeth, and one or more second teeth of the plurality of teeth of the patient;
generating a virtual first part shell a virtual first part shell anatomically adapted to the first teeth, and a virtual second part shell anatomically adapted to the second teeth;
obtaining user input to generate a virtual modified active shell part that is at least partially not anatomically adapted to the teeth of the patient, and which comprises one or more active elements at a labial side or lingual side of the virtual modified active shell part and configured to apply forces to the first shell part and/or the second shell part;
generating a virtual model of an orthodontic appliance including the virtual first part shell, the virtual second part shell and the virtual modified active shell part; and
generating an input file for a 3D printer based on the virtual model of the orthodontic appliance.

14. The method according to claim 13, further comprising:
suggesting one or more of the following: first teeth, second teeth, virtual modified active shell part, active elements.

15. An orthodontic kit, comprising: a series of consecutive shells, wherein the shells are configured to apply a corrective distal force to one or more of the teeth of the patient, and wherein the consecutive shells of the series are shaped to correspond to consecutive positions of the teeth in a desired treatment, and wherein
at least one of the consecutive shells is an orthodontic appliance according to any of claims 1-8.
